# EUROPEAN PATENT APPLICATION

(11) **EP 4 598 106 A1**
(43) Date of publication of application: **06.08.2025**
(21) Application number: 22960446.7
(22) Date of filing: 30.09.2022
(51) Int. Cl.: H04W 24/10, H04W 24/08

(54) **PATH ADDING METHOD AND APPARATUS**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/123643
(87) International publication number: WO 2024/065842

(57) **Abstract**

Embodiments of the present disclosure disclose a path adding method and apparatus, which can be applied to the technical field of communications. The method performed by a remote terminal device comprises: receiving an indirect path adding command sent by a network side device, the indirect path adding command being used for instructing the remote terminal device to establish a connection to the network side device by means of a relay terminal device; and determining, according to a specific condition, whether to establish a connection to the network side device by means of the relay terminal device. Therefore, an indirect path can be successfully added to the remote terminal device, and signaling waste and delay caused by addition failing are prevented.

## Description

### FIELD

The present disclosure relates to the field of communication technologies, and in particular to a method and a device for adding a path.

### BACKGROUND

In related arts, a terminal device may achieve communication with a network side device via relay of another terminal device. A terminal device without connection with a base station is called as a remote terminal device, and a terminal device providing a relay function is called as a relay terminal device.

In order to improve a transmission rate and reliability, it is considered that the remote terminal device supports direct connection with the network side device and connection with the network side device via the relay terminal device. The direct connection with the network side device is called as a direct path, and the connection with the network side device via the relay terminal device is called as an indirect path.

Therefore, how to add the indirect path for the remote terminal device is an urgent problem to be solved.

### SUMMARY

Embodiments of the present disclosure provide a method and a device for adding a path, capable of successfully adding an indirect path for a remote terminal device and avoiding signaling waste and delay caused by adding failure.

In a first aspect, embodiments of the present disclosure provide a method for adding a path. The method is performed by a remote terminal device, and includes: receiving an indirect path adding command sent by a network side device, in which, the indirect path adding command instructs the remote terminal device to set up a connection with the network side device via a relay terminal device; determining whether to set up the connection with the network side device via the relay terminal device according to a specific condition.

In this technical solution, the remote terminal device receives the indirect path adding command sent by the network side device, in which, the indirect path adding command instructs the remote terminal device to set up the connection with the network side device via the relay terminal device, and determines whether to set up the connection with the network side device via the relay terminal device according to the specific condition. Therefore, the method is capable of successfully adding the indirect path for the remote terminal device and avoiding signaling waste and delay caused by adding failure.

In a second aspect, embodiments of the present disclosure provide a method for adding a path. The method is performed by a network side device, and includes: sending an indirect path adding command to a remote terminal device, in which, the indirect path adding command instructs the remote terminal device to set up a connection with the network side device via a relay terminal device; the indirect path adding command is configured for the remote terminal device to determine whether to set up the connection with the network side device via the relay terminal device according to a specific condition.

In a third aspect, embodiments of the present disclosure provide a communication device, which has some or all of functions of the remote terminal device implementing the method as described in the first aspect. For example, functions of the communication device may include functions of some or all of the embodiments in the present disclosure, or may include functions of implementing any one of the embodiments in the present disclosure alone. The functions may be implemented by hardware, or by hardware executing corresponding software. The hardware or software includes one or more units or modules corresponding to the above functions.

In an implementation, a structure of the communication device may include a transceiver module and a processing module, and the processing module is configured to support the communication device to execute corresponding functions in the above method. The transceiver module is configured to support communication between the communication device and other device. The communication device may further include a storage module, and the storage module is configured to couple with the transceiver module and the processing module, and store a computer program and data needed for the communication device.

In an implementation, the communication device includes: a transceiver module, configured to receive an indirect path adding command sent by a network side device, in which, the indirect path adding command instructs a remote terminal device to set up a connection with the network side device via a relay terminal device; and a processing module, configured to determine whether to set up the connection with the network side device via the relay terminal device according to a specific condition.

In a fourth aspect, embodiments of the present disclosure provide another communication device, which has some or all of functions of the network side device implementing the method as described in the second aspect. For example, functions of the communication device may include functions of some or all of the embodiments in the present disclosure, or may include functions of implementing any one of the embodiments in the present disclosure alone. The functions may be implemented by hardware, or by hardware executing corresponding software. The hardware or software includes one or more units or modules corresponding to the above functions.

In an implementation, a structure of the communication device may include a transceiver module and a processing module, and the processing module is configured to support the communication device to execute corresponding functions in the above method. The transceiver module is configured to support communication between the communication device and other device. The communication device may further include a storage module, and the storage module is configured to couple with the transceiver module and the processing module, and store a computer program and data needed for the communication device.

In an implementation, the communication device includes a transceiver module, configured to send an indirect path adding command to a remote terminal device, in which, the indirect path adding command instructs the remote terminal device to set up a connection with the network side device via a relay terminal device; the indirect path adding command is configured for the remote terminal device to determine whether to set up the connection with the network side device via the relay terminal device according to a specific condition.

In a fifth aspect, embodiments of the present disclosure provide a communication device, which includes a processor. When the processor calls a computer program in a memory, the method as described in the first aspect is performed.

In a sixth aspect, embodiments of the present disclosure provide a communication device, which includes a processor. When the processor calls a computer program in a memory, the method as described in the second aspect is performed.

In the seventh aspect, embodiments of the present disclosure provide a communication device, including a processor and a memory, where the memory is configured to store a computer program; the processor is configured to execute the computer program stored in the memory to cause the communication device to perform the method as described in the first aspect.

In an eighth aspect, embodiments of the present disclosure provide a communication device, including a processor and a memory, where the memory is configured to store a computer program; the processor is configured to execute the computer program stored in the memory to cause the communication device to perform the method as described in the second aspect.

In a ninth aspect, embodiments of the present disclosure provide a communication device, including a processor and an interface circuit, where the interface circuit is configured to receive code instructions and transmit them to the processor, and the processor is configured to execute the code instructions to cause the apparatus to perform the method as described in the first aspect.

In the tenth aspect, embodiments of the present disclosure provide a communication device, including a processor and an interface circuit, where the interface circuit is configured to receive code instructions and transmit them to the processor, and the processor is configured to execute the code instructions to cause the apparatus to perform the method as described in the second aspect.

In the eleventh aspect, embodiments of the present disclosure provide a communication system, and the system includes the communication device according to the third aspect and the communication device according to the fourth aspect, or the system includes the communication device according to the fifth aspect and the communication device according to the sixth aspect, or the system includes the communication device according to the seventh aspect and the communication device according to the eighth aspect, or the system includes the communication device according to the ninth aspect and the communication device according to the tenth aspect.

In a twelfth aspect, embodiments of the present disclosure provide a computer readable storage medium, configured to store instructions used by the remote terminal device described above, and when the instructions are executed, the remote terminal device is caused to perform the method as described in the first aspect.

In a thirteenth aspect, embodiments of the present disclosure provide a readable storage medium, configured to store instructions used by the network side device described above, and when the instructions are executed, the network side device is caused to perform the method as described in the second aspect.

In a fourteenth aspect, the present disclosure further provides a computer program product including a computer program, which, when executed on a computer, causes the computer to perform the method as described in the first aspect.

In a fifteenth aspect, the present disclosure further provides a computer program product including a computer program, which, when executed on a computer, causes the method as described in the second aspect.

In the sixteenth aspect, the present disclosure provides a chip system, including at least one processor and an interface, for supporting the remote terminal device to implement functions involved in the first aspect, such as determining or processing at least one of data or information involved in the above method. In a possible design, the chip system further includes a memory, and the memory is configured to store a computer program and data needed by the terminal device. The chip system may be formed by chips, or may include chips and other discrete devices.

In the seventeenth aspect, the present disclosure provides a chip system, including at least one processor and an interface, for supporting the network side device to implement functions involved in the second aspect, such as determining or processing at least one of data or information involved in the above method. In a possible design, the chip system further includes a memory, and the memory is configured to store a computer program and data needed by the network side device. The chip system may be formed by chips, or may include chips and other discrete devices.

In an eighteenth aspect, the present disclosure provides a computer program, which, when executed on a computer, causes the computer to perform the method as described in the first aspect.

In a nineteenth aspect, the present disclosure provides a computer program, which, when executed on a computer, causes the computer to perform the method as described in the second aspect.

### BRIEF DESCRIPTION OF THE DRAWINGS

To better clarify technical solutions of embodiments of the present disclosure or the background, drawings used in the embodiments of the present disclosure or the background are described hereinafter.
FIG. 1 is a schematic diagram of an architecture of a communication system according to embodiments of the present disclosure.
FIG. 2 is a flowchart of a method for adding a path according to an embodiment of the present disclosure.
FIG. 3 is a flowchart of a method for adding a path according to an embodiment of the present disclosure.
FIG. 4 is a flowchart of a method for determining by a remoter terminal device that a relay terminal device change a service cell according to an embodiment of the present disclosure.
FIG. 5 is a flowchart of a method for adding a path according to an embodiment of the present disclosure.
FIG. 6 is a flowchart of a method for adding a path according to an embodiment of the present disclosure.
FIG. 7 is a flowchart of a method for adding a path according to an embodiment of the present disclosure.
FIG. 8 is a flowchart of a method for adding a path according to an embodiment of the present disclosure.
FIG. 9 is a structural schematic diagram of a communication device according to an embodiment of the present disclosure;
FIG. 10 is a structural schematic diagram of a communication device according to an embodiment of the present disclosure; and
FIG. 11 is a structural schematic diagram of a chip according to an embodiment of the present disclosure.

### DETAILED DESCRIPTION

In order to better understand a method and a device for adding a path according to embodiments of the present disclosure, a communication system to which embodiments of the present disclosure are applicable is first described hereinafter.

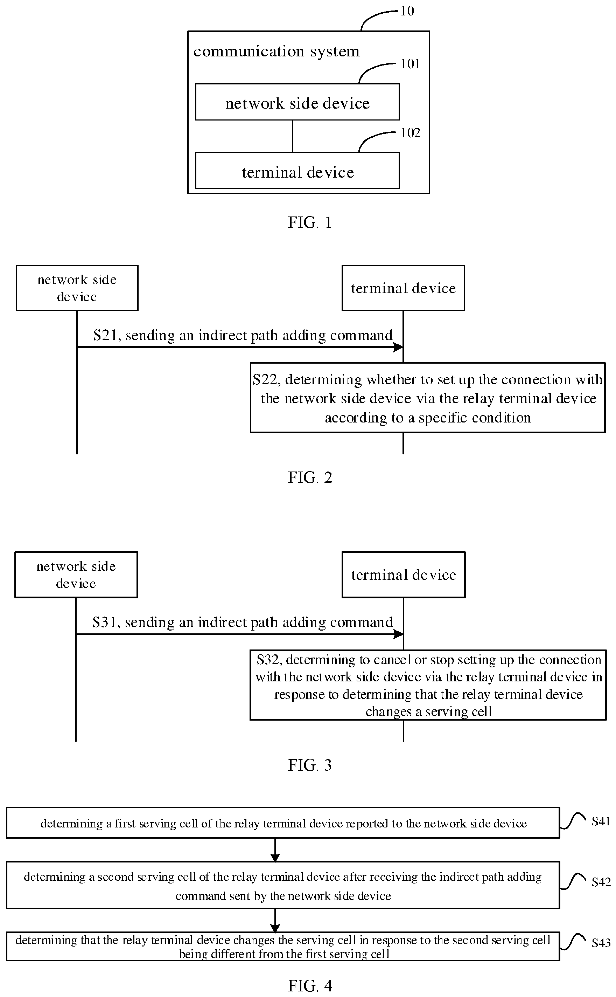

Reference is made to FIG. 1, which is a schematic diagram of an architecture of a communication system according to an embodiment of the present disclosure. The communication system may include, but is not limited to, one network side device and one terminal device. The quantity and forms of devices shown in FIG. 1 are only for examples and do not constitute a limitation on the embodiments of the present disclosure. In actual applications, two or more than two network side devices and two or more than two terminal devices may be included. In FIG. 1, a case where the communication system includes one network side device 101 and one terminal device 102 is taken as an example.

It should be noted that the technical solutions of the embodiments of the present disclosure can be applied to various communication systems, such as a long term evolution

(Long Term Evolution, LTE) system, a 5th generation (5th Generation, 5G) mobile communication system, a 5G new radio (New Radio, NR) system, or other new mobile communication systems in the future.

The network side device 101 in the embodiments of the present disclosure is an entity on a network side for transmitting or receiving signals. For example, the network side device 101 may be an evolved NodeB (evolved NodeB, eNB), a transmission reception point (Transmission Reception point, TRP), a next generation NodeB (next generation NodeB, gNB) in an NR system, a base station in other mobile communication systems in the future, or an access node in a wireless fidelity (Wireless Fidelity, WiFi) system, etc. The specific technologies and the specific device form used by the network side device are not limited in the embodiments of the present disclosure. The network side device according to the embodiments of the present disclosure may include a central unit (Central Unit, CU) and a distributed unit (Distributed Unit, DU). The CU may also be referred to as a control unit. Protocol layers of the network side device, such as a base station, may be separated by using the structure of CU-DU, where functions of some protocol layers are arranged in the CU for centralized control, and functions of some or all of the remaining protocol layers are distributed in the DU, and the CU centrally controls the DU.

The terminal device 102 in the embodiments of the present disclosure is an entity on a user side for receiving or transmitting signals, such as a mobile phone. The terminal device may also be referred to as a terminal (Terminal), a user equipment (User Equipment, UE), a mobile station (Mobile Station, MS), a mobile terminal (Mobile Terminal, MT), etc. The terminal device may be a car with a communication function, a smart car, a mobile phone, a wearable device, a tablet computer (Pad), a computer with a wireless reception and transmission function, a virtual reality (Virtual Reality, VR) terminal device, an augmented reality (Augmented Reality, AR) terminal device, a wireless terminal device in industrial control (industrial control), a wireless terminal device in self-driving (Self-driving), a wireless terminal device in a remote medical surgery (Remote medical surgery), a wireless terminal device in a smart grid (Smart Grid), a wireless terminal device in transportation safety (Transportation Safety), a wireless terminal device in a smart city (Smart City), a wireless terminal device in a smart home (Smart Home), etc. The specific technologies and the specific device form used by the terminal device are not limited in the embodiments of the present disclosure.

It can be understood that the communication system described in the embodiments of the present disclosure is for more clearly illustrating the technical solutions of the embodiments of the present disclosure, and does not constitute a limitation on the technical solutions provided by the embodiments of the present disclosure. A person skilled in the art can know that, with evolution of the system architecture and emergence of new service scenarios, the technical solutions provided by the embodiments of the present disclosure are also applicable to similar technical problems.

In addition, for convenience of understanding embodiments of the present disclosure, the following explanations are provided.

First, in the embodiments of the present disclosure, "(configured to) indicate" may include being configured to indicate directly or indirectly. When describing that a certain information is configured to indicate A, it may include that the information directly indicates A or indirectly indicates A, but does not mean that the information must carry A.

Information indicated by the information is called information to be indicated. In a specific implementation process, there are many ways to indicate the information to be indicated, for example, but not limited to, directly indicating the information to be indicated, such as the information to be indicated itself or an index of the information to be indicated; alternatively, indirectly indicating the information to be indicated by indicating other information, in which, an association between the other information and the information to be indicated is present; alternatively, indicating only a part of the information to be indicated, while other parts of the information to be indicated are known or agreed in advance. For example, indication of specific information may also be achieved by means of an arrangement order of each information agreed in advance (such as specified by a protocol), to reduce indication overhead to a certain extent.

The information to be indicated may be sent as a whole or divided into a plurality of pieces of sub-information and sent the plurality of pieces of sub-information respectively, and sending periods and/or sending occasions of these sub-information may be the same or different. The specific sending method is not limited in the disclosure. Among them, the sending periods and/or the sending occasions of these sub-information may be pre-defined, for example, pre-defined according to a protocol.

Second, embodiments of the present disclosure list a plurality of implementations to clearly illustrate the technical solutions of the embodiments of the present disclosure. Of course, those skilled in the art can understand that a plurality of embodiments provided in the embodiments of the present disclosure can be executed separately, or can be executed together with the methods of other embodiments in the embodiments of the present disclosure, or can be executed separately or in combination together with some methods in other related arts, which is not limited in the embodiments of the present disclosure.

In order to support direct communication between terminal devices, sidelink communication mode is introduced, and an interface between terminal devices is PC-5. According to a correspondence between a sending terminal device and a receiving terminal device, three transmission modes, including unicast, multicast and broadcast, are supported on the sidelink. The sending terminal device sends sidelink control information (SCI) on a PSCCH (physical sidelink control channel) channel and sends second-stage SCI on a PSSCH (physical sidelink shared channel). The SCI may carry a resource location of transmission data, a source identifier and a target identifier, etc. After receiving the SCI, the receiving terminal device determines whether to receive the corresponding data and which process it corresponds to, based on a source terminal device identifier and a target terminal device identifier. In a unicast connection, each terminal device corresponds to one target identifier. In a multicast connection, each terminal device may belong to one or more groups, and each group corresponds to one target identifier. In a broadcast connection, all terminal devices correspond to at least one target identifier.

A terminal device may communicate with the network side device via relay of another terminal device instead of directly connecting to the network side device. The terminal device that is not connected to the network side device is called as a remote terminal device (remote UE), and the terminal device that provides relay function is called as a relay terminal device (relay UE). The remote terminal device and the relay terminal device communicate via sidelink unicast. This architecture is called as U2N (UE to NW) relay.

The relay terminal device and the remote terminal device may discover each other based on a discovery process. After the discovery process is started, the terminal devices may send or receive discovery signals. The discovery signal carries information such as a serving cell identifier and a terminal device identifier of the terminal device.

Direct connection between the terminal device and the network side device is called as a direct path, and a connection between the terminal device and the network side device via the relay terminal device is called as an indirect path.

In order to improve a transmission rate and reliability, the remote terminal device may maintain a connection with the network side device via both the direct paths and the indirect path. This function is called as multipath connection. The remote terminal device must be in a connected state to support the multipath connection.

A bearer of the remote terminal device may be transmitted only via the direct path, which is called as direct bearer, or only via the indirect path, which is called as indirect bearer, or via both the direct path and the indirect path, which is called as multipath bearer.

A serving cell of the direct path of the remote terminal device may be the same as or different from a serving cell of the indirect path of the remote terminal device. The serving cell of the indirect path is a serving cell of the relay terminal device. In the multipath connection, the direct path and the indirect path of the remote terminal device must be connected to the same network side device (for example, gNB).

In a case that the remote terminal device is connected to the network side device via the direct path, the network side device may add an indirect path for the remote terminal device, to realize the multipath connection.

The remote terminal device reports a measurement result to the network side device, and the measurement result includes a sidelink identifier of the relay terminal device, the serving cell identifier of the relay terminal device, and a sidelink channel quality between the remote terminal device and the relay terminal device. The network side device may decide which relay terminal device provides the indirect path to be added based on the measurement result of the relay terminal device reported by the remote terminal device.

However, when adding the indirect path for the remote terminal device, the relay terminal device providing the indirect path may be in any RRC (radio resource control) state, including a connected state, an idle state or an inactive state.

In a case that the relay terminal device is in the idle or inactive state when adding the indirect path for the remote terminal device, the relay terminal device may perform cell reselection and change the cell and/or base station. In a case that the relay terminal device may perform the cell reselection after the remote terminal device receives an indirect path adding command sent by the network side device, the remote terminal device and the relay terminal device may be in different base stations, adding failure of the indirect path may be present, resulting in signaling waste and delay.

In view of this, embodiments of the present disclosure provide a method for adding a path, capable of successfully adding an indirect path for a remote terminal device and avoiding signaling waste and delay caused by adding failure.

A method and a device for adding a path provided by the present disclosure are described in detail below with reference to the accompanying drawings.

Reference is made to FIG. 2, which is a flowchart of a method for adding a path according to an embodiment of the present disclosure. As shown in FIG. 2, the method may include, but is not limited to, the following steps.

At step S21, a network side device sends an indirect path adding command to a remote terminal device, and the indirect path adding command instructs the remote terminal device to set up a connection with the network side device via a relay terminal device.

In all embodiments of the present disclosure, it is understood that the network side device and the remote terminal device may be connected via a direct path or via one or more indirect paths. Of course, due to network connection problems, a case of link failure may be present for a direct path connection between the remote terminal device and the network side device, or an indirect path connection between the remote terminal device and the network side device via a relay terminal device.

In a possible implementation, the network side device may be connected with the remote terminal device via the direct path, and send the indirect path adding command via the direct path connection.

In an embodiment of the present disclosure, the network side device sending the indirect path adding command to the remote terminal device may include directly sending the indirect path adding command to the remote terminal device in a case that the remote terminal device is connected to the network side device via the direct path, or may include sending the indirect path adding command to the remote terminal device via relay transmission of a first relay terminal device (a terminal device that plays a relay role in an added indirect path) in a case that the remote terminal device is connected to the network side device via the added indirect path.

The indirect path adding command is configured to instruct the remote terminal device to set up the connection with the network side device via the relay terminal device. The network side device may determine the relay terminal device by itself, or the network side device may also determine the relay terminal device based on information reported by the remote terminal device to send the indirect path adding command to the remote terminal device, instructing the remote terminal device to set up the connection with the network side device via the relay terminal device.

It should be noted that, in a case that the remote terminal device is connected to the network side device via the added indirect path, and the network side device sends the indirect path adding command to the remote terminal device via the relay transmission of the first relay terminal device (the terminal device that plays the relay role in the added indirect path), the relay terminal device indicated by the indirect path adding command may be the same as or different from the first relay terminal device, which will not be specifically limited in embodiments of the present disclosure.

In some embodiments, the indirect path adding command includes at least one of:
a bearer configuration of transmission via relay; or
a configuration for providing an identifier of the relay terminal device of an indirect path.

In an embodiment of the present disclosure, the indirect path adding command includes the bearer configuration of transmission via relay, and the bearer configuration of transmission via relay may be configured to instruct the remote terminal device to set up the connection with the network side device via the relay terminal device.

In a case that the remote terminal device is connected to the network side device through the added indirect path, the network side device sending the indirect path addition command to the remote terminal device may include sending the bearer configuration of transmission via relay to the remote terminal device, for example, sending a bearer configuration of transmission via the first relay terminal device.

In an embodiment of the present disclosure, the indirect path adding command includes the configuration for providing the identifier of the relay terminal device of the indirect path, and the configuration for providing the identifier of the relay terminal device of the indirect path may be configured to instruct the remote terminal device to set up the connection with the network side device via the relay terminal device.

The network side device may send the configuration for providing the identifier of the relay terminal device of the indirect path to the remote terminal device via the direct path between the network side device and the remote terminal device, so as to instruct the remote terminal device to set up the connection with the network side device via the relay terminal device.

In a possible implementation, in a case that the network side device determines the relay terminal device based on the information reported by the remote terminal device, the remote terminal device may measure a terminal device that can be used for relay and report a measurement results to the network side device. The measurement result includes an identifier of the terminal device that can be used for relay, a service cell identifier, and a sidelink channel quality between the terminal device and the remote terminal device.

The network side device determines the relay terminal device according to the measurement result reported by the remote terminal device, and sends the indirect path adding command to the remote terminal device, instructing the remote terminal device to set up the connection with the network side device via the relay terminal device.

It is understandable that after receiving the indirect path adding command sent by the network side device, the remote terminal device may perform an indirect path adding process with the relay terminal device. The remote terminal device executes step S22.

At step S22, the remote terminal device determines whether to set up the connection with the network side device via the relay terminal device according to a specific condition.

It is understood that in setting up a multipath connection, the direct path and the indirect path of the remote terminal device must be connected to the same network side device.

In view of this, in an embodiment of the present disclosure, the terminal device may determines whether to set up the connection with the network side device via the relay terminal device according to the specific condition in a case of receiving the indirect path adding command sent by the network side device.

The specific condition may be any one of the following: whether the remote terminal device is connected to the same network side device as the terminal device simultaneously, whether the remote terminal device belongs to the same service cell as the terminal device, whether the remote terminal device changes the service cell, etc.

In some possible implementations, in a case that the specific condition is whether the relay terminal device changes the service cell, the remote terminal device determining whether to set up the connection with the network side device via the relay terminal device according to the specific condition includes: determining to cancel or stop setting up the connection with the network side device via the relay terminal device in response to determining that the relay terminal device changes a serving cell.

In an embodiment of the present disclosure, in a case that the specific condition is whether the relay terminal device changes the service cell, if the remote terminal device determines that the relay terminal device changes the serving cell, it can be determined to cancel or stop setting up the connection with the network side device via the relay terminal device. If the remote terminal device determines that the relay terminal device does not change the serving cell, it may be determined to execute the process of setting up the connection with the network side device via the relay terminal device.

In some embodiments, the remote terminal device determines that the relay terminal device changes the service cell by determining a first serving cell of the relay terminal device reported to the network side device; determining a second serving cell of the relay terminal device after receiving the indirect path adding command sent by the network side device; determining that the relay terminal device changes the serving cell in response to the second serving cell being different from the first serving cell.

It is understandable that the remote terminal device may pre-report information of relevant terminal devices that can provide relay, including information of the service cell, and the remote terminal device may determine the first service cell of the relay terminal device reported to the network side device.

After receiving the indirect path adding command sent by the network side device, the remote terminal device may determine the second service cell of the relay terminal device at this point.

In a case that the first service cell is the same as the second service cell, the remote terminal device may determine that the relay terminal device does not change the service cell. In a case that the first service cell is different from the second service cell, the remote terminal device may determine that the relay terminal device has changed the service cell.

In an embodiment of the present disclosure, the remote terminal device may execute the process of setting up the connection with the network side device via the relay terminal device in a case of determining that the first service cell is the same as the second service cell and that the relay terminal device does not change the service cell.

In an embodiment of the present disclosure, the remote terminal device may send first indication information to the network side device, in a case of determining that the first service cell is different from the second service cell and that the relay terminal device changes the service cell, in which the first indication information indicates a service cell of the relay terminal device.

The first indication information may further indicate an identifier of the relay terminal device.

Based on this, after receiving the first indication information sent by the remote terminal device, the network side device may determine that the relay terminal device changes the service cell, and cannot set up the connection with the remote terminal device via the relay terminal device, and cannot add an indirect path based on the relay terminal device. In this case, the network side device may send an updated indirect path addition command to the remote terminal device.

The updated indirect path adding command may instruct the remote terminal device to set up the connection with the network side device via the second relay terminal device. The second relay terminal device is different from the relay terminal device.

In some possible implementations, the specific condition is whether the service cell of the relay terminal device is the same as the target cell corresponding to the target cell identifier, and the remote terminal device determining whether to set up the connection with the network side device via the relay terminal device according to the specific condition includes: determining to cancel or stop setting up the connection with the network side device via the relay terminal device in response to determining that a serving cell of the relay terminal device is different from a target cell.

It is understood that the remote terminal device may determine the target cell corresponding to the target cell identifier. The remote terminal device may determine the target cell corresponding to the target cell identifier based on implementation, or may also determine the target cell corresponding to the target cell identifier based on a configuration of the network side device, or may also determine the target cell corresponding to the target cell identifier based on a protocol agreement.

The target cell corresponding to the target cell identifier may be a cell to which the remote terminal device belongs, or may be another cell in the network side device corresponding to the cell to which the remote terminal device belongs.

In some embodiments, the remote terminal device may receive configuration information sent by the network side device, and the configuration information is configured to indicate the target cell identifier.

In an embodiment of the present disclosure, in a case that the remote terminal device receives the configuration information sent by the network side device, and the configuration information is configured to indicate the target cell identifier, the remote terminal device may determine the target cell corresponding to the target cell identifier.

In an embodiment of the present disclosure, the remote terminal device may determine the service cell of the relay terminal device.

In a case that the service cell of the relay terminal device is the same as the target cell corresponding to the target cell identifier, the remote terminal device may determine that the network side device connected to the relay terminal device is the same as the network side device connected to the remote terminal device itself. In a case that the service cell of the relay terminal device is different from the target cell corresponding to the target cell identifier, the remote terminal device may determine that the network side device connected to the relay terminal device is different from the network side device connected to the remote terminal device itself.

The network side device may carry a plurality of relay terminal device identifiers and a plurality of corresponding target cell identifiers in the indirect path addition command, and each relay terminal device may correspond to a different target cell identifier. The remote terminal device determines the relay device that can be accessed based on the target cell identifier. If more than one relay device meets a requirement, any one relay device can be selected from the more than one relay device to access the network.

In an embodiment of the present disclosure, the remote terminal device may execute the process of setting up the connection with the network side device via the relay terminal device in a case of determining that the serving cell of the relay terminal device is the same as the target cell corresponding to the target cell identifier.

In an embodiment of the present disclosure, the remote terminal device may determines to cancel or stop setting up the connection with the network side device via the relay terminal device in a case of determining that the serving cell of the relay terminal device is different from the target cell corresponding to the target cell identifier.

Furthermore, the remote terminal device may send second indication information to the network side device, in which, the second indication information indicates that the serving cell of the relay terminal device is different from the target cell. The second indication information may also carry an identifier of the relay terminal device.

Based on this, after receiving the second indication information sent by the remote terminal device, the network side device may determine that the service cell of the relay terminal device is different from the target cell, and cannot set up the connection with the remote terminal device via the relay terminal device, and cannot add an indirect path based on the relay terminal device. In this case, the network side device may send an updated indirect path addition command to the remote terminal device.

The updated indirect path adding command may instruct the remote terminal device to set up the connection with the network side device via the second relay terminal device. The second relay terminal device is different from the relay terminal device.

By implementing the embodiments of the present disclosure, the remote terminal device receives the indirect path adding command sent by the network side device, in which, the indirect path adding command instructs the remote terminal device to set up the connection with the network side device via the relay terminal device, and determines whether to set up the connection with the network side device via the relay terminal device according to the specific condition. Therefore, the method is capable of successfully adding the indirect path for the remote terminal device and avoiding signaling waste and delay caused by adding failure.

Reference is made to FIG. 3, which is a flowchart of a method for adding a path according to an embodiment of the present disclosure. As shown in FIG. 3, the method may include, but is not limited to, the following steps.

At step S31, a network side device sends an indirect path adding command to a remote terminal device, in which, the indirect path adding command instructs the remote terminal device to set up a connection with the network side device via a relay terminal device.

Relevant description of step S31 may refer to relevant description in the above embodiment, and will not be repeated hereinafter.

At step S32, the remote terminal device determines to cancel or stop setting up the connection with the network side device via the relay terminal device in response to determining that the relay terminal device changes a serving cell.

In an embodiment of the present disclosure, in a case that the specific condition is whether the relay terminal device changes the service cell, if the remote terminal device determines that the relay terminal device changes the serving cell, it can be determined to cancel or stop setting up the connection with the network side device via the relay terminal device. If the remote terminal device determines that the relay terminal device does not change the serving cell, it may be determined to execute the process of setting up the connection with the network side device via the relay terminal device.

In some embodiments, the remote terminal device determines that the relay terminal device changes the service cell by determining a first serving cell of the relay terminal device reported to the network side device; determining a second serving cell of the relay terminal device after receiving the indirect path adding command sent by the network side device; determining that the relay terminal device changes the serving cell in response to the second serving cell being different from the first serving cell.

It is understandable that the remote terminal device may pre-report information of relevant terminal devices that can provide relay, including information of the service cell, and the remote terminal device may determine the first service cell of the relay terminal device reported to the network side device.

After receiving the indirect path adding command sent by the network side device, the remote terminal device may determine the second service cell of the relay terminal device at this point.

In a case that the first service cell is the same as the second service cell, the remote terminal device may determine that the relay terminal device does not change the service cell. In a case that the first service cell is different from the second service cell, the remote terminal device may determine that the relay terminal device has changed the service cell.

In this embodiment, the specific condition may be whether the relay terminal device changes the serving cell.

It is noted that in an embodiment of the present disclosure, steps S31 to S32 may be implemented separately or in combination with any other steps in the embodiments of the present disclosure, for example, in combination with steps S21 to S22 in the embodiments of the present disclosure, and the embodiments of the present disclosure are not limited to this.

By implementing the embodiments of the present disclosure, the network side device sends the indirect path adding command to the remote terminal device, in which, the indirect path adding command instructs the remote terminal device to set up the connection with the network side device via the relay terminal device, and in a case that the specific condition is whether the relay terminal device changes the serving cell, the remote terminal device determines to cancel or stop setting up the connection with the network side device via the relay terminal device in response to determining that the relay terminal device changes the serving cell. Therefore, the method is capable of successfully adding the indirect path for the remote terminal device and avoiding signaling waste and delay caused by adding failure.

Reference is made to FIG. 4, which is a flowchart of a method for adding a path according to an embodiment of the present disclosure. As shown in FIG. 4, the method may include, but is not limited to, the following steps.

At step S41, the remote terminal device determines a first serving cell of the relay terminal device reported to the network side device.

At step S42, the remote terminal device re-determines a second serving cell of the relay terminal device in response to receiving the indirect path adding command.

At step S43, the remote terminal device determines that the relay terminal device changes the serving cell in response to the second serving cell being different from the first serving cell.

In an embodiment of the present disclosure, the remote terminal device determines that the relay terminal device changes the service cell by determining the first serving cell of the relay terminal device reported to the network side device, re-determining the second serving cell of the relay terminal device in response to receiving the indirect path adding command sent by the network side device, and determining that the relay terminal device changes the serving cell in response to the second serving cell being different from the first serving cell.

It is understandable that the remote terminal device may pre-report information of relevant terminal devices that can provide relay, including information of the service cell, and the remote terminal device may determine the first service cell of the relay terminal device reported to the network side device.

After receiving the indirect path adding command sent by the network side device, the remote terminal device may determine the second service cell of the relay terminal device at this point.

In a case that the first service cell is the same as the second service cell, the remote terminal device may determine that the relay terminal device does not change the service cell. In a case that the first service cell is different from the second service cell, the remote terminal device may determine that the relay terminal device has changed the service cell.

It should be noted that in the embodiments of the present disclosure, steps S41 to S43 can be implemented separately or in combination with any other steps in the embodiments of the present disclosure, for example, in combination with steps S21 to S22 and/or steps S31 to S32 in the embodiments of the present disclosure, and the embodiments of the present disclosure are not limited to this.

By implementing an embodiment of the present disclosure, the remote terminal device determines the first serving cell of the relay terminal device reported to the network side device, determines the second serving cell of the relay terminal device after receiving the indirect path adding command sent by the network side device, and determines that the relay terminal device changes the serving cell in response to the second serving cell being different from the first serving cell. Thus, the remote terminal device can determine that the relay terminal device changes the service cell.

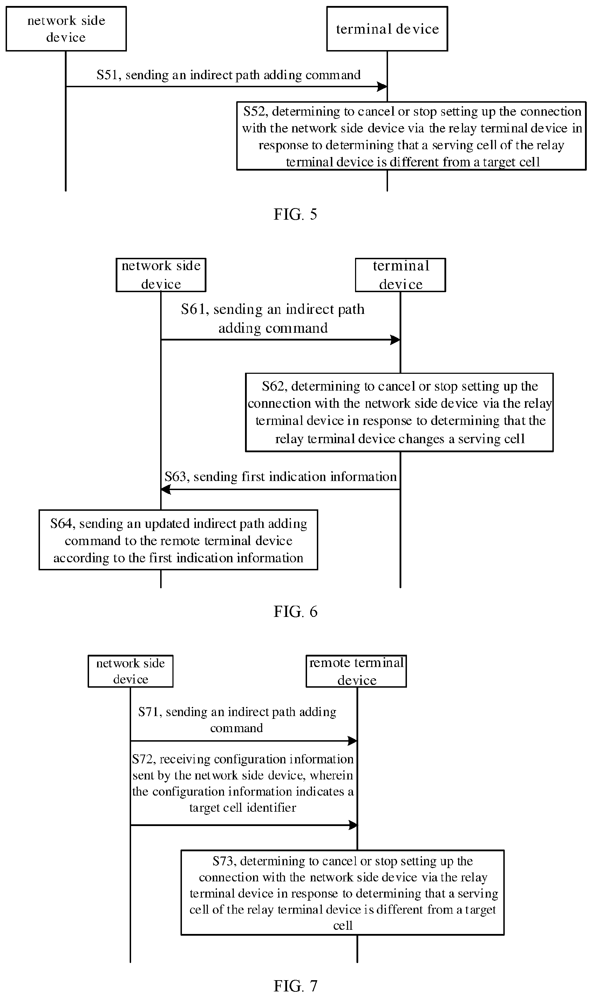

Reference is made to FIG. 5, which is a flowchart of a method for adding a path according to an embodiment of the present disclosure. As shown in FIG. 5, the method may include, but is not limited to, the following steps.

At step S51, a network side device sends an indirect path adding command to a remote terminal device, in which, the indirect path adding command instructs the remote terminal device to set up a connection with the network side device via a relay terminal device.

Relevant description of step S51 may refer to relevant description in the above embodiment, and will not be repeated hereinafter.

At step S52, the remote terminal device determines to cancel or stop setting up the connection with the network side device via the relay terminal device in response to determining that a serving cell of the relay terminal device is different from a target cell.

It is understood that the remote terminal device may determine the target cell corresponding to the target cell identifier. The remote terminal device may determine the target cell corresponding to the target cell identifier based on implementation, or may also determine the target cell corresponding to the target cell identifier based on a configuration of the network side device, or may also determine the target cell corresponding to the target cell identifier based on a protocol agreement.

The target cell corresponding to the target cell identifier may be a cell to which the remote terminal device belongs, or may be another cell in the network side device corresponding to the cell to which the remote terminal device belongs.

In some embodiments, the remote terminal device may receive configuration information sent by the network side device, and the configuration information is configured to indicate the target cell identifier.

In an embodiment of the present disclosure, in a case that the remote terminal device receives the configuration information sent by the network side device, and the configuration information is configured to indicate the target cell identifier, the remote terminal device may determine the target cell corresponding to the target cell identifier.

In an embodiment of the present disclosure, the remote terminal device may determine the service cell of the relay terminal device.

In a case that the service cell of the relay terminal device is the same as the target cell corresponding to the target cell identifier, the remote terminal device may determine that the network side device connected to the relay terminal device is the same as the network side device connected to the remote terminal device itself. In a case that the service cell of the relay terminal device is different from the target cell corresponding to the target cell identifier, the remote terminal device may determine that the network side device connected to the relay terminal device is different from the network side device connected to the remote terminal device itself.

In this embodiment, the specific condition is whether the service cell of the relay terminal device is the same as the target cell corresponding to the target cell identifier.

In an embodiment of the present disclosure, the remote terminal device may determines to cancel or stop setting up the connection with the network side device via the relay terminal device in a case of determining that the serving cell of the relay terminal device is different from the target cell corresponding to the target cell identifier.

It is noted that in an embodiment of the present disclosure, steps S51 to S52 may be implemented separately or in combination with any other steps in the embodiments of the present disclosure, for example, in combination with steps S21 to S22 and/or steps S31 to S32 in the embodiments of the present disclosure, and the embodiments of the present disclosure are not limited to this.

By implementing the embodiments of the present disclosure, the network side device sends the indirect path adding command to the remote terminal device, in which, the indirect path adding command instructs the remote terminal device to set up the connection with the network side device via the relay terminal device, and in a case that the specific condition is whether the service cell of the relay terminal device is the same as the target cell corresponding to the target cell identifier, the remote terminal device determines to cancel or stop setting up the connection with the network side device via the relay terminal device in response to determining that the service cell of the relay terminal device is different from the target cell. Therefore, the method is capable of successfully adding the indirect path for the remote terminal device and avoiding signaling waste and delay caused by adding failure.

Reference is made to FIG. 6, which is a flowchart of a method for adding a path according to an embodiment of the present disclosure. As shown in FIG. 6, the method may include, but is not limited to, the following steps.

At step S61, a network side device sends an indirect path adding command to a remote terminal device, in which, the indirect path adding command instructs the remote terminal device to set up a connection with the network side device via a relay terminal device.

At step S62, the remote terminal device determines to cancel or stop setting up the connection with the network side device via the relay terminal device in response to determining that the relay terminal device changes a serving cell.

Relevant description of steps S61 to S62 may refer to relevant description in the above embodiment, and will not be repeated hereinafter.

At step S63, the remote terminal device sends first indication information to the network side device, in which, the first indication information indicates a service cell of the relay terminal device.

At step S64, the network side device sends an updated indirect path adding command to the remote terminal device according to the first indication information.

In an embodiment of the present disclosure, the remote terminal device may send first indication information to the network side device, in a case of determining that the first service cell is different from the second service cell and that the relay terminal device changes the service cell, in which the first indication information indicates a service cell of the relay terminal device.

The first indication information may further indicate an identifier of the relay terminal device.

Based on this, after receiving the first indication information sent by the remote terminal device, the network side device may determine that the relay terminal device changes the service cell, and cannot set up the connection with the remote terminal device via the relay terminal device, and cannot add an indirect path based on the relay terminal device. In this case, the network side device may send an updated indirect path addition command to the remote terminal device.

The updated indirect path adding command may instruct the remote terminal device to set up the connection with the network side device via the second relay terminal device. The second relay terminal device is different from the relay terminal device.

In this embodiment, the specific condition is whether the relay terminal device changes the service cell.

It is noted that in an embodiment of the present disclosure, steps S61 to S64 may be implemented separately or in combination with any other steps in the embodiments of the present disclosure, for example, in combination with steps S21 to S22 and/or steps S31 to S32 and/or steps S41 to S43 in the embodiments of the present disclosure, and the embodiments of the present disclosure are not limited to this.

By implementing the embodiments of the present disclosure, the network side device sends the indirect path adding command to the remote terminal device, in which, the indirect path adding command instructs the remote terminal device to set up the connection with the network side device via the relay terminal device, and in a case that the specific condition is whether the relay terminal device changes the serving cell, the remote terminal device determines to cancel or stop setting up the connection with the network side device via the relay terminal device in response to determining that the relay terminal device changes the serving cell. The remote terminal device sends the first indication information to the network side device, in which, the first indication information indicates the service cell of the relay terminal device, the network side device sends the updated indirect path adding command to the remote terminal device according to the first indication information. Therefore, the method is capable of successfully adding the indirect path for the remote terminal device and avoiding signaling waste and delay caused by adding failure.

Reference is made to FIG. 7, which is a flowchart of a method for adding a path according to an embodiment of the present disclosure. As shown in FIG. 7, the method may include, but is not limited to, the following steps.

At step S71, a network side device sends an indirect path adding command to a remote terminal device, in which, the indirect path adding command instructs the remote terminal device to set up a connection with the network side device via a relay terminal device.

Relevant description of step S71 may refer to relevant description in the above embodiment, and will not be repeated hereinafter.

At step S72, the network side device sends configuration information to the remote terminal device, in which, the configuration information indicates a target cell identifier.

In an embodiment of the present disclosure, in a case that the remote terminal device receives the configuration information sent by the network side device, and the configuration information is configured to indicate the target cell identifier, the remote terminal device may determine the target cell corresponding to the target cell identifier.

In an embodiment of the present disclosure, the remote terminal device may determine the service cell of the relay terminal device.

In a case that the service cell of the relay terminal device is the same as the target cell corresponding to the target cell identifier, the remote terminal device may determine that the network side device connected to the relay terminal device is the same as the network side device connected to the remote terminal device itself. In a case that the service cell of the relay terminal device is different from the target cell corresponding to the target cell identifier, the remote terminal device may determine that the network side device connected to the relay terminal device is different from the network side device connected to the remote terminal device itself.

It should be noted that this embodiment of the present disclosure does not limit an order of executing step S71 and step S72. For example, step S71 and step S72 may be executed simultaneously, or step S71 may be executed after step S72, or step S72 may be executed after step S71.

At step S73, the remote terminal device determines to cancel or stop setting up the connection with the network side device via the relay terminal device in response to determining that a serving cell of the relay terminal device is different from a target cell.

In an embodiment of the present disclosure, the remote terminal device may execute the process of setting up the connection with the network side device via the relay terminal device in a case of determining that the serving cell of the relay terminal device is the same as the target cell corresponding to the target cell identifier.

In an embodiment of the present disclosure, the remote terminal device may determines to cancel or stop setting up the connection with the network side device via the relay terminal device in a case of determining that the serving cell of the relay terminal device is different from the target cell corresponding to the target cell identifier.

By implementing the embodiments of the present disclosure, the network side device sends the indirect path adding command to the remote terminal device, in which, the indirect path adding command instructs the remote terminal device to set up the connection with the network side device via the relay terminal device, and the network side device sends the configuration information to the remote terminal device, in which, the configuration information indicates the target cell identifier, and in a case that the specific condition is whether the service cell of the relay terminal device is the same as the target cell corresponding to the target cell identifier, the remote terminal device determines to cancel or stop setting up the connection with the network side device via the relay terminal device in response to determining that the service cell of the relay terminal device is different from the target cell. Therefore, the method is capable of successfully adding the indirect path for the remote terminal device and avoiding signaling waste and delay caused by adding failure.

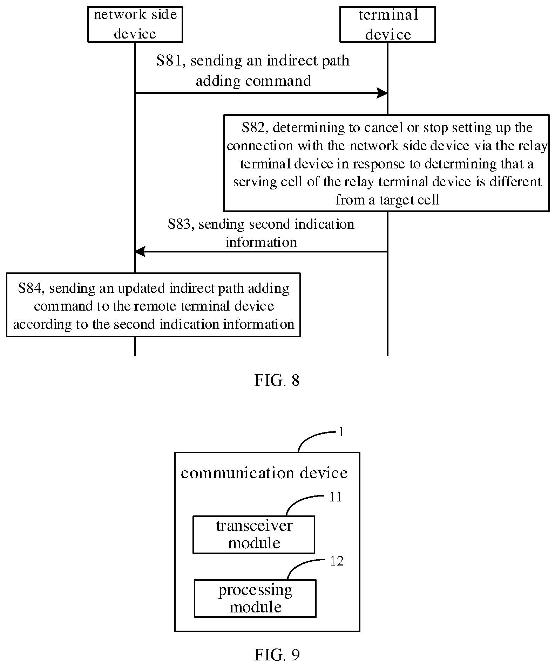

Reference is made to FIG. 8, which is a flowchart of a method for adding a path according to an embodiment of the present disclosure. As shown in FIG. 8, the method may include, but is not limited to, the following steps.

At step S81, a network side device sends an indirect path adding command to a remote terminal device, in which, the indirect path adding command instructs the remote terminal device to set up a connection with the network side device via a relay terminal device.

At step S82, the remote terminal device determines to cancel or stop setting up the connection with the network side device via the relay terminal device in response to determining that a serving cell of the relay terminal device is different from a target cell.

Relevant description of step S81 to S82 may refer to relevant description in the above embodiment, and will not be repeated hereinafter.

At step S83, the remote terminal device sends second indication information to the network side device, in which, the second indication information indicates that the serving cell of the relay terminal device is different from the target cell.

At step S84, the network side device sends an updated indirect path adding command to the remote terminal device according to the second indication information.

In an embodiment of the present disclosure, in a case that the remote terminal device determines that the service cell of the relay terminal device is different from the target cell corresponding to the target cell identifier, the remote terminal device may send the second indication information to the network side device, and the second indication information is configured to indicate that the service cell of the relay terminal device is different from the target cell corresponding to the target cell identifier.

Based on this, after receiving the second indication information sent by the remote terminal device, the network side device may determine that the service cell of the relay terminal device is different from the target cell, and cannot set up the connection with the remote terminal device via the relay terminal device, and cannot add an indirect path based on the relay terminal device. In this case, the network side device may send an updated indirect path addition command to the remote terminal device.

The updated indirect path adding command may instruct the remote terminal device to set up the connection with the network side device via the second relay terminal device. The second relay terminal device is different from the relay terminal device.

It is noted that in an embodiment of the present disclosure, steps S81 to S84 may be implemented separately or in combination with any other steps in the embodiments of the present disclosure, for example, in combination with steps S21 to S22 and/or steps S51 to S52 and/or steps S71 to S73 in the embodiments of the present disclosure, and the embodiments of the present disclosure are not limited to this.

In this embodiment, the specific condition is whether the service cell of the relay terminal device is the same as the target cell.

By implementing the embodiments of the present disclosure, the network side device sends the indirect path adding command to the remote terminal device, in which, the indirect path adding command instructs the remote terminal device to set up the connection with the network side device via the relay terminal device, and in a case that the specific condition is whether the service cell of the relay terminal device is the same as the target cell corresponding to the target cell identifier, the remote terminal device determines to cancel or stop setting up the connection with the network side device via the relay terminal device in response to determining that the service cell of the relay terminal device is different from the target cell. The remote terminal device sends the second indication information to the network side device, in which, the second indication information indicates that the serving cell of the relay terminal device is different from the target cell corresponding to the target cell identifier, and the network side device sends the updated indirect path adding command to the remote terminal device according to the second indication information. Therefore, the method is capable of successfully adding the indirect path for the remote terminal device and avoiding signaling waste and delay caused by adding failure.

In the above embodiments of the disclosure, the methods according to the embodiments of the disclosure are described from the perspectives of an interaction between a remote terminal device and a network side device. In order to realize each of functions in the methods according to the above embodiments of the disclosure, the network side device and the terminal device may include a hardware structure, a software module, and realize each of the above functions in the form of hardware structure, software module, or a combination of hardware structure and software module. A certain function of the above functions may be performed in the form of hardware structure, software module, or a combination of hardware structure and software module.

Reference is made to FIG. 9, which a structural schematic diagram of a communication device 1 is provided in an embodiment of the present disclosure. The communication device 1 shown in FIG. 9 may include a transceiver module 11 and a processing module 12. The transceiver module 11 may include a transmitting module and/or a reception module. The transmitting module is configured to implement a transmitting function, and the reception module is used to implement a reception function. The transceiver module 11 may implement the transmitting function and/or the reception function.

The communication device 1 may be a remote terminal device.

The device may include a transceiver module 11 and a processing module 12.

The transceiver module 11 is configured to receive an indirect path adding command sent by a network side device, in which, the indirect path adding command instructs the remote terminal device to set up a connection with the network side device via a relay terminal device.

The processing module 12 is configured to determine whether to set up the connection with the network side device via the relay terminal device according to a specific condition.

In some embodiments, the indirect path adding command includes at least one of:
a bearer configuration of transmission via relay; or
a configuration for providing an identifier of the relay terminal device of an indirect path.

In some embodiments, the processing module 12 is further configured to, determine to cancel or stop setting up the connection with the network side device via the relay terminal device in response to determining that the relay terminal device changes a serving cell.

In some embodiments, the processing module 12 is further configured to, determine a first serving cell of the relay terminal device reported to the network side device; determine a second serving cell of the relay terminal device after receiving the indirect path adding command sent by the network side device; determine that the relay terminal device changes the serving cell in response to the second serving cell being different from the first serving cell.

In some embodiments, the transceiver module 11 is further configured to, send first indication information to the network side device, in which, the first indication information indicates a service cell of the relay terminal device.

In some embodiments, the processing module 12 is further configured to, determine to cancel or stop setting up the connection with the network side device via the relay terminal device in response to determining that a serving cell of the relay terminal device is different from a target cell.

In some embodiments, the transceiver module 11 is further configured to, receive configuration information sent by the network side device, in which, the configuration information indicates a target cell identifier.

In some embodiments, the transceiver module 11 is further configured to, send second indication information to the network side device, in which, the second indication information indicates that the serving cell of the relay terminal device is different from the target cell corresponding to the target cell identifier.

The communication device 1 may be a network side device.

The device may include a transceiver module 11.

The transceiver module 11 is configured to send an indirect path adding command to a remote terminal device, in which, the indirect path adding command instructs the remote terminal device to set up a connection with the network side device via a relay terminal device; the indirect path adding command is configured for the remote terminal device to determine whether to set up the connection with the network side device via the relay terminal device according to a specific condition.

In some embodiments, the indirect path adding command includes at least one of:
a bearer configuration of transmission via relay; or
a configuration for providing an identifier of the relay terminal device of an indirect path.

In some embodiments, the transceiver module 11 is further configured to, receive first indication information sent by the remote terminal device, in which, the first indication information indicates a serving cell of the relay terminal device, and the first indication information is sent by the remote terminal device in response to determining that the relay terminal device changes the serving cell; send an updated indirect path adding command to the remote terminal device according to the first indication information.

In some embodiments, the transceiver module 11 is further configured to, send configuration information to the remote terminal device, in which, the configuration information indicates a target cell identifier.

In some embodiments, the transceiver module 11 is further configured to, receive second indication information sent by the remote terminal device; in which, the second indication information indicates that a serving cell of the relay terminal device is different from a target cell corresponding to a target cell identifier; the second indication information is sent by the remote terminal device in response to determining that the serving cell of the relay terminal device is different from the target cell; and send an updated indirect path adding command to the remote terminal device according to the second indication information.

Regarding the communication device 1 in the above embodiment, the specific manner in which each module performs operations has been described in detail in the method embodiments, and will not be repeated hereinafter.

The communication device 1 provided in the above embodiments of the present disclosure achieves the same or similar beneficial effects as the method for adding the path provided in the above some embodiments, which will not be repeated hereinafter.

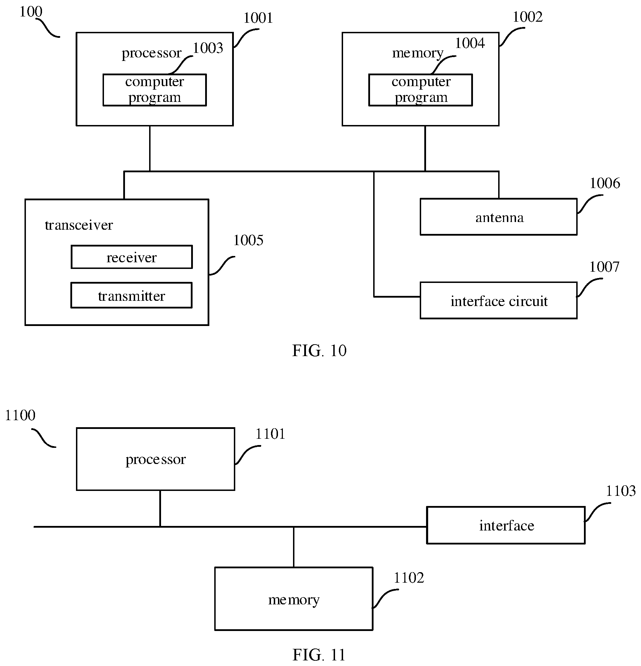

Reference is made to FIG. 10, which is a structural schematic diagram of a communication device 1000 according to an embodiment of the present disclosure. The communication device 1000 may be a network side device, or a terminal device, or a chip, chip system, or processor that supports the network side device to implement the above method, or a chip, chip system, or processor that supports the terminal device to implement the above method. The communication device 1000may be configured to implement the method described in the above method embodiments. For details, reference may made to the description in the above method embodiments.

The communication device 1000 may include one or more processors 1001. The processor 1001 may be a general-purpose processor or a special-purpose processor, or the like. For example, the processor may be a baseband processor or a central processing unit. The baseband processor may be configured to process communication protocols and communication data. The central processing unit may be configured to control the communication device (such as a base station, a baseband chip, a terminal device, a terminal device chip, a DU or a CU, etc.), execute a computer program, and process data for the computer program.

Optionally, the communication device 1000 may further include one or more memories 1002, on which a computer program 1004 may be stored, and the memory 1002 may store a computer program 1004, to cause the communication device 1000 to perform the method described in the above method embodiments. Optionally, the memory 1002 may further store data. The communication device 1000 and the memory 1002 may be arranged separately or integrated together.

Optionally, the communication device 1000 may further include a transceiver 1005 and an antenna 1006. The transceiver 1005 may be referred to as a reception and transmission unit, a transceiver unit, a reception and transmission circuit, etc., and is configured to implement reception and transmission functions. The transceiver 1005 may include a receiver and a transmitter. The receiver may be called a receiver unit or a reception circuit, etc., configured to implement the reception function; the transmitter may be referred to as a transmitter unit, a transmission circuit, etc., configured to implement the transmission function.

Optionally, the communication device 1000 may further include one or more interface circuits 1007. The interface circuit 1007 is configured to receive code instructions and transmit them to the processor 1001. The processor 1001executes the code instructions to cause the communication device 1000 to perform the method described in the above method embodiments.

The communication device 1000 is a remote terminal device: the transceiver 1005 is used to execute step S21 in FIG. 2; step S31 in FIG. 3; step S51 in FIG. 5; steps S61 and S63 in FIG. 6; steps S71 and S72 in FIG. 7; steps S81 and S83 in FIG. 8; the processor 1001 is used to execute step S22 in FIG. 2; step S32 in FIG. 3; steps S41 to S43 in FIG. 4; step S52 in FIG. 5; steps S62 and S64 in FIG. 6; step S73 in FIG. 7; steps S82 and S84 in FIG. 8.

The communication device 1000 is a network side device: the transceiver 1005 is used to execute step S21 in FIG. 2; step S31 in FIG. 3; step S51 in FIG. 5; steps S61 and S63 in FIG. 6; steps S71 and S72 in FIG. 7; steps S81 and S83 in FIG. 8; the processor 1001 is used to execute step S64 in FIG. 6; step S84 in FIG. 8.

In an implementation, the processor 1001 may include a transceiver for implementing reception and transmission functions. For example, the transceiver may be a reception and transmission circuit, an interface, or an interface circuit. The reception and transmission circuit, the interface or the interface circuit configured to implement the reception and transmission functions may be separated or integrated together. The above reception and transmission circuit, interface or interface circuit may be configured for reading and writing codes/data, or the above reception and transmission circuit, interface or interface circuit may be configured for signal transmission or transfer.

In an implementation, the processor 1001 may store a computer program 1003, and the computer program 1003 is executed on the processor 1001, to cause the communication device 1000 to perform the method described in the above method embodiments. The computer program 1003 may be embedded in the processor 1001, and in this case, the processor 1001 may be implemented by hardware.

In an implementation, the communication device 1000 may include a circuit, and the circuit may implement functions of reception or transmission or communication in the above method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, etc. The processor and the transceiver may be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device described in the above embodiments may be a terminal device (such as the terminal device in the above method embodiments) or a network side device (such as the network side device in the above method embodiments), but the scope of the communication device described in the present disclosure is not limited thereto, and the structure of the communication device may not be limited to FIG. 10. The communication device may be a stand-alone device or may be part of a larger device. For example, the communication device may be:
(1) an independent integrated circuit (IC), or chip, or chip system or subsystem;
(2) a collection of one or more ICs, where, optionally, the IC collection may include a storage component for storing data and computer programs;
(3) ASIC, such as modem;
(4) a module that can be embedded into other devices;
(5) a receiver, terminal device, intelligent terminal device, a cellular phone, a wireless equipment, a handheld device, a mobile unit, a vehicle-mounted device, a network side device, a cloud device, an artificial intelligence device, etc.;
(6) others, etc.

For a case where the communication device may be a chip or a chip system, reference may be made to FIG. 11, which is a structural diagram of a chip.

The chip 1100 includes a processor 1101 and an interface 1103. The quantity of processors 1101 may be one or more, and the quantity of interfaces 1103 may be more than one.

For a case where the chip is configured to implement the functions of the remote terminal device in the embodiments of the present disclosure:

The interface 1103 is configured to receive code instructions and transmit the code instructions to the processor.

The processor 1101 is configured to run the code instructions to execute the method for adding the path as described in some of the above embodiments.

For a case where the chip is configured to implement the functions of the network side device in the embodiments of the present disclosure:

The interface 1103 is configured to receive code instructions and transmit the code instructions to the processor.

The processor 1101 is configured to run the code instructions to execute the method for adding the path as described in some of the above embodiments.

Optionally, the chip 1100 further includes a memory 1102, and the memory 1102 is configured to store needed computer programs and data.

Those skilled in the art can also understand that various illustrative logical blocks and steps listed in the embodiments of the present disclosure can be implemented by electronic hardware, computer software, or a combination of both. Whether such functions are implemented in hardware or software depends on the specific application and the overall system design requirement. Those skilled in the art can use various methods to implement the described functions for each specific application, but such implementation should not be understood as exceeding the protection scope of the embodiments of the present disclosure.

The embodiments of the present disclosure also provide a system for adding a path, which includes the communication device serving as a terminal device and the communication device serving as a network side device in the embodiments of FIG. 9, or the system includes the communication device serving as a terminal device and the communication device serving as a network side device in the embodiments of FIG. 10.

The present disclosure further provides a readable storage medium, on which instructions are stored. When the instructions are executed by a computer, functions of any of the above method embodiments are implemented.

The present disclosure further provides a computer program product. The computer program product is executed by a computer to implement functions of any of the above method embodiments.

The above embodiments may be implemented in whole or in part by software, hardware, firmware, or any combination thereof. When implemented using software, it may be implemented in whole or in part in the form of a computer program product. The computer program product includes one or more computer programs. When the computer program is loaded and executed on a computer, the processes or functions described in the embodiments of the present disclosure are generated in whole or in part. The computer may be a general-purpose computer, a special-purpose computer, a computer network, or other programmable device. The computer program may be stored in a computer readable storage medium or transferred from a computer readable storage medium to another computer readable storage medium. For example, the computer program may be transferred from a website, computer, server, or data center to another website, computer, server or data center through wired means (such as coaxial cable, optical fiber, digital subscriber line (DSL)) or wireless means (such as infrared, radio, microwave, etc.). The computer readable storage medium may be any available medium that can be accessed by a computer, or a data storage device integrated by one or more available media, which includes a server, a data center, and so on. The available medium may be a magnetic medium (e.g., floppy disk, hard disk, magnetic tape), optical medium (e.g., high-density digital video disc (DVD)), or semiconductor medium (e.g., solid state disk (SSD)) etc.

Those of ordinary skill in the art may appreciate that the first, second, and other numerical numbers involved in the present disclosure are only for convenience of description and are not used to limit the scope of the embodiments of the present disclosure, or to indicate the order.

At least one in the present disclosure may also be described as one or more, and multiple may be two, three, four or more, which are not limited by the present disclosure. In the embodiments of the present disclosure, technical features are distinguished by terms "first", "second", "third", "A", "B", "C" and "D", etc. The technical features described by the terms "first", "second", "third", "A", "B", "C" and "D" are not in an order of precedence or in an order of size.

The corresponding relationships shown in each table in the present disclosure can be configured or predefined. The values of the information in each table are only examples and can be configured as other values, which is not limited by the present disclosure. When the correspondence between information and each parameter is configured, it is not necessarily required to configure all the correspondences shown in each table. For example, in the table in the present disclosure, the correspondences shown in some rows may not be configured. For another example, appropriate form adjustments can be made based on the above table, such as splitting, merging, etc. The names of the parameters shown in the titles of the above tables may also be other names understandable by the communication device, and the values or expressions of the parameters may also be other values or expressions understandable by the communication device. When implementing the above tables, other data structures can also be used, such as array, queue, container, stack, linear list, pointer, linked list, tree, graph, structure, class, heap, distributed table or hash table.

The term "predefined" in the present disclosure may be understood as defined, pre-defined, stored, pre-stored, pre-negotiated, pre-configured, solidified, or pre-burnt.

Those of ordinary skill in the art will appreciate that the units and algorithm steps of each example described in conjunction with the embodiments disclosed herein can be implemented with electronic hardware, or a combination of computer software and electronic hardware. Whether these functions are performed in hardware or software depends on the specific application and design constraints of the technical solutions. Those of ordinary skill in the art may implement the described functions using different methods for each specific application, but such implementations should not be considered as exceeding the scope of the present disclosure.

Those of ordinary skill in the art can clearly understand that for the convenience and simplicity of description, reference may be made to the corresponding processes in the above method embodiments for the specific operating processes of the systems, devices and units described above, which will not be further described herein.

The above descriptions are only specific embodiments of the present disclosure, but the protection scope of the present disclosure is not limited thereto. Any technician familiar with the technical field can easily think of changes or substitutions within the technical scope of in the present disclosure, all of which shall fall within the protection scope of the present disclosure. Therefore, the protection scope of the present disclosure is defined by the protection scope of the claims.

## Claims

1. A method for adding a path, performed by a remote terminal device, comprising:
receiving an indirect path adding command sent by a network side device, wherein the indirect path adding command instructs the remote terminal device to set up a connection with the network side device via a relay terminal device; and
determining whether to set up the connection with the network side device via the relay terminal device according to a specific condition.

2. The method according to claim 1, wherein the indirect path adding command comprises at least one of:
a bearer configuration of transmission via relay; or
a configuration for providing an identifier of the relay terminal device of an indirect path.

3. The method according to claim 1 or 2, wherein determining whether to set up the connection with the network side device via the relay terminal device according to the specific condition comprises:
determining to cancel or stop setting up the connection with the network side device via the relay terminal device in response to determining that the relay terminal device changes a serving cell.

4. The method according to claim 3, wherein determining that the relay terminal device changes the serving cell comprises:
determining a first serving cell of the relay terminal device reported to the network side device;
determining a second serving cell of the relay terminal device after receiving the indirect path adding command sent by the network side device; and
determining that the relay terminal device changes the serving cell in response to the second serving cell being different from the first serving cell.

5. The method according to claim 3 or 4, further comprising:
sending first indication information to the network side device, wherein the first indication information indicates a service cell of the relay terminal device.

6. The method according to claim 1 or 2, wherein determining whether to set up the connection with the network side device via the relay terminal device according to the specific condition comprises:
determining to cancel or stop setting up the connection with the network side device via the relay terminal device in response to determining that a serving cell of the relay terminal device is different from a target cell.

7. The method according to claim 6, further comprising:
receiving configuration information sent by the network side device, wherein the configuration information indicates a target cell identifier.

8. The method according to claim 6 or 7, further comprising:
sending second indication information to the network side device, wherein the second indication information indicates that the serving cell of the relay terminal device is different from the target cell corresponding to the target cell identifier.

9. A method for adding a path, performed by a network side device, comprising:
sending an indirect path adding command to a remote terminal device, wherein the indirect path adding command instructs the remote terminal device to set up a connection with the network side device via a relay terminal device; the indirect path adding command is configured for the remote terminal device to determine whether to set up the connection with the network side device via the relay terminal device according to a specific condition.

10. The method according to claim 9, wherein the indirect path adding command comprises at least one of:
a bearer configuration of transmission via relay; or
a configuration for providing an identifier of the relay terminal device of an indirect path.

11. The method according to claim 9 or 10, further comprising:
receiving first indication information sent by the remote terminal device, wherein the first indication information indicates a serving cell of the relay terminal device, and the first indication information is sent by the remote terminal device in response to determining that the relay terminal device changes the serving cell; and
sending an updated indirect path adding command to the remote terminal device according to the first indication information.

12. The method according to claim 9 or 10, further comprising:
sending configuration information to the remote terminal device, wherein the configuration information indicates a target cell identifier.

13. The method according to claim 9 or 10, further comprises:
receiving second indication information sent by the remote terminal device; wherein the second indication information indicates that a serving cell of the relay terminal device is different from a target cell corresponding to a target cell identifier; the second indication information is sent by the remote terminal device in response to determining that the serving cell of the relay terminal device is different from the target cell; and
sending an updated indirect path adding command to the remote terminal device according to the second indication information.

14. A communication device, comprising:
a transceiver module, configured to receive an indirect path adding command sent by a network side device, wherein the indirect path adding command instructs a remote terminal device to set up a connection with the network side device via a relay terminal device; and
a processing module, configured to determine whether to set up the connection with the network side device via the relay terminal device according to a specific condition.

15. A communication device, comprising:
a transceiver module, configured to send an indirect path adding command to a remote terminal device, wherein the indirect path adding command instructs the remote terminal device to set up a connection with the network side device via a relay terminal device; the indirect path adding command is configured for the remote terminal device to determine whether to set up the connection with the network side device via the relay terminal device according to a specific condition.

16. A communication device, comprising a processor and a memory, the memory stores a computer program, the processor is configured to execute the computer program stored in the memory, causing the device to perform the method according to any one of claims 1 to 8, or the processor is configured to execute the computer program stored in the memory, causing the device to perform the method according to any one of claims 9 to 13.

17. A communication device, further comprising a processor and an interface circuit; wherein the interface circuit is configured to receive code instructions and transmit the code instructions to the processor; and
the processor is configured to run the code instructions to execute the method according to any one of claims 1 to 8, or is configured to run the code instructions to execute the method according to any one of claims 9 to 13.

18. A computer-readable storage medium for storing instructions that, when executed, enable the method according to any one of claims 1 to 8 to be implemented, or, when executed, enable the method according to any one of claims 9 to 13 to be implemented.
